# EUROPÄISCHE PATENTSCHRIFT

(11) **EP 0 810 716 B1**
(45) Veröffentlichungstag und Bekanntmachung des Hinweises auf die Patenterteilung: **31.10.2001**
(21) Anmeldenummer: 97106449.8
(22) Anmeldetag: 18.04.1997
(51) Int. Cl.: H02K 5/12, H02K 9/19, F04C 11/00

(54) **Elektromotor**
Electric motor
Moteur électrique

(30) Priorität: 31.05.1996 DE 29609700 U
(43) Veröffentlichungstag der Anmeldung: 03.12.1997
(73) Patentinhaber: HEILMEIER & WEINLEIN Fabrik für Oel-Hydraulik GmbH & Co. KG, 81673 München (DE)
(72) Erfinder: Neumair, Georg, 85402 Thalhausen (DE)
(74) Vertreter: Grünecker, Kinkeldey, Stockmair & Schwanhäusser Anwaltssozietät

(56) Entgegenhaltungen:
- EP-A- 0 093 041
- EP-A- 0 198 250
- EP-A- 0 566 788
- EP-A- 0 583 994
- DE-B- 1 105 976
- US-A- 1 985 887
- US-A- 4 445 056
- PATENT ABSTRACTS OF JAPAN vol. 016, no. 120 (E-1182), 26.März 1992 & JP 03 289340 A (TOSHIBA CORP), 19.Dezember 1991,

## Beschreibung

Die Erfindung betrifft einen Elektromotor gemäß dem Oberbegriff des Anspruchs 1 sowie ein hydraulisches Motorpumpenaggregat gemäß Oberbegriff des nebengeordneten Anpruchs 4.

In Elektromotoren, z.B. Asynchronmotoren, wird die Spaltweite zwischen dem Außenumfang des Läufers und dem Innenumfang des Stators so klein wie möglich gewählt. Ein unterer Grenzbereich der Spaltweite wird diktiert durch die Erfordernisse, ein Anstreifen des Läufers im Betrieb zu vermeiden, und den Bearbeitungsaufwand für die Oberflächen in einem technisch noch sinnvollen Ausmaß zu halten. Hersteller liefern Elektromotoren mit einem Läuferdurchmesser z.B. zwischen ca. 50mm und ca. 150mm mit einer einseitigen Spaltweite von ca. 0,2mm (für kleine Läuferdurchmesser) bis zu 0,4mm (für große Läuferdurchmesser). Die Spaltweite ist dabei für den Betrieb des Elektromotors in Luft optimiert. Werden, wie häufig, die Komponenten des Elektromotors als Rohlinge bezogen, so gibt der Hersteller dem Bezieher unabhängig von den späteren Einsatzbedingungen des Motors die konkrete Anweisung, die Bearbeitung der sich im Spaltbereich gegenüberliegenden Oberflächen so durchzuführen, daß sich je nach Läuferdurchmesser die erwähnte einseitige Spaltweite zwischen ca. 0,2 und ca. 0,4mm ergibt. Der Bezug von Rohlingen ist zweckmäßig, wenn der Verbraucher den Elektromotor noch an den Einsatzzweck anpaßt, z.B. durch Einsetzen des Stators in ein spezielles Gehäuse, und Einbringen einer speziellen Welle in den Läufer. In diesen Fällen wäre nämlich eine vorhergehende Endbearbeitung des Läufers und/oder Stators unzweckmäßig. Speziell bei elektrohydraulischen Motorpumpenaggregaten, bei denen der Elektromotor zusammen mit der Ölpumpe in einem das Ölreservoir bildenden Gehäuse untergebracht wird und als Unteröl-Motor arbeitet, wäre dann die Spaltweite im Hinblick auf optimierte elektrische Eigenschaften bzw. den Wirkungsgrad des Elektromotors wieder nur für den Betrieb in einem gasförmigen Medium bemessen. Dies führt jedoch bei Verwendung des Elektromotors als Unteröl-Motor in einem solchen Aggregat, in dem der Elektromotor überwiegend im Leerlauf arbeitet, dazu, daß speziell im Leerlaufbetrieb der Elektromotor viel Leistung aufnimmt, was zu einer signifikanten Wärmebelastung des Hydrauliköls führt. Das Hydrauliköl hat in dem Aggregat nähere Aufgaben,. Es soll den Elektromotor kühlen. Ferner hat es beim Arbeiten im Verbraucher und in den Leitungen Wärme aufzunehmen. Die so mehrfache Wärmebelastung des Hydrauliköls beeinflußt seine Standzeit und erfordert intensive, baulich aufwendige und teure Kühlmaßnahmen, ggfs. eigene Ölkühler. Elektrohydraulische Motorpumpenaggregate mit einem Unteröl-Elektromotor (Asynchronmotor) sind beispielsweise bekannt aus EP-A-0 198 250, DE-C-29 36 669, DE-U-75 27 405.

In US-A-1 985 887 werden für elektrische Tauchmotoren frühere Bestrebungen erwähnt, unter Verschlechterung des magnetischen Wirkungsgrades die Größe des Spaltes zwischen dem Rotor und dem Stator zu vergrößern, um Haftreibungsverluste durch ein dielektrisches Medium zu verringern.

Ein aus EP-A-0 093 041 bekannter Synchronmotor wird innen mit Öl oder Wasser gekühlt. Zur Minimierung der Verluste bei hohen Drehzahlen bzw. bei der Maximaldrehzahl des Motors sind vorberechnete Form- und Oberflächengüten der den Spalt zwischen dem Rotor und dem Stator definierenden Oberflächen verwirklicht. Die durch die Flüssigkeitsreibung im Spalt absorbierte Energie soll dadurch ein Sollmaß nicht überschreiten. Die gegenüberliegenden Oberflächen werden dreh- und ober spanabhebend bearbeitet.

Bei einem aus EP-A-0 583 994 bekannten Asynchronmotor für hohe Drehzahlen > 100 000 U/min wird der Luftspalt auf das 3- bis 4-fache eines Standardluftspalts mit 0,5 % bis 1,0% des Rotordurchmessers vergrößert. Der Asynchronmotor wird nicht für Unterölbetrieb eingesetzt.

Unverhältnismäßig große Spaltweiten für den Betrieb in Luft oder Wasser offenbaren JP 32 89 340 und EP-A-0 566 788.

Der Erfindung liegt die Aufgabe zugrunde, einen Elektromotor der eingangs genannten Art so zu gestalten, daß bei Unterölbetrieb das Hydrauliköl vom Elektromotor thermisch gering belastet wird, sowie ein hydraulisches Motorpumpenaggregat zu schaffen, bei dem das Hydrauliköl durch den Unteröl-Eletromotor thermisch so wenig wie möglich belastet und Antriebsleitung eingespart wird.

Die gestellte Aufgabe wird erfindungsgemäß mit den Merkmalen des Anspruchs 1 bzw. den Merkmalen des nebengeordneten Anspruchs 4 gelöst.

Indem erfindungsgemäß von dem sich in der Fachwelt eingebürgerten Standard abgewichen wird, die Spaltweite so klein wie möglich auszubilden, weil eine größere Spaltweite zu einem lauten Laufgeräusch bzw. zu einer verschlechterten magnetischen Induktion beim Betrieb in einem gasförmigen Medium führt, werden mit diesem als Unteröl- Elektromotor überraschend die Wärmebelastung für das Hydrauliköl verringert und für den gleichen Förderdruck bzw. die gleiche Fördermenge eine Einsparung der Antriebsleistung erreicht. Die Standzeit für das Hydrauliköl wird verlängert bzw. es reichen auch für Dauerbetrieb einfache Kühlmaßnahmen aus, da die thermische Belastung des Hydrauliköls, insbesondere im Leerlaufbetrieb, und z.B. bei einem Asynchronmotor über den gesamten Arbeitsbereich, spürbar reduziert ist. Als zusätzlicher Vorteil ergibt sich aus der vergrößerten Spaltweite eine größere Unempfindlichkeit gegen Versetzungen des Läufers bzw. der den Läufer tragenden Welle in ihren Lagerungen. Diese überraschenden, vorteilhaften Wirkungen werden mit baulich geringem Aufwand erreicht, weil bei der Endbearbeitung des Läufers und/oder des Stators die Vergrößerung der Spaltweite problemlos zu bewerkstelligen ist. Der Grund für diese positiven Effekte liegt vermutlich darin, daß mit einem bewußt weiteren als dem von Motomerstellem als Optimum angesehenen Luftspalt für den Betrieb in einem gasförmigen Medium bei Unteröl-Betrieb das Hydrauliköl im Spalt nicht mehr so starken Scherbelastungen unterliegt, die zu signifikanten Reibungsverlusten führen. Durch die Vergrößerung der Spaltweite wird die Scherbelastung und die Reibungsverluste für das Hydrauliköl reduziert, was sich überraschend in einem verminderten Leistungsbedarf des Unteröl-Elektromotors niederschlägt. Bei einem Asynchronmotor mit einem Läuferdurchmesser von 103mm und einer vom Hersteller vorgegebenen, einseitigen Spaltweite von 0,3mm ergibt sich im Unteröl-Leerlaufbetrieb mit einer Drehzahl von 1500 s⁻¹ eine Leistungsaufnahme von beispielsweise 820 Watt. Wird die Spaltweite verdoppelt auf 0,6mm, dann sinkt die Leistungsaufnahme auf 640 Watt. Wird die Spaltweite verdreifacht auf ca. 0,9mm, dann beträgt die Leistungsaufnahme 720 Watt. D.h., nur mit der Vergrößerung der Spaltweite ergibt sich umgehend eine Leistungseinsparung. Diese steigt mit der Vergröβerung der Spaltweite bis zu einem Maximum und nimmt dann allmählich ab. Das Optimum ergibt sich je nach Typ und Größe (Leistung) des Elektromotors bei einer vergrößerten Spaltweite, die ein optimaler Kompromiß zwischen den verringerten Reibungsverlusten und den sich ändernden elektrischen Betriebsbedingungen ist. Die optimale, vergrößerte Spaltweite kann von Motortyp zu Motortyp variieren. Sie ist in jedem Fall größer als die "vorgeschriebene" Spaltweite für den Betrieb desselben Elektromotors in gasförmigem Medium. Dabei ist die für den Unteröl-Betrieb optimale Spaltweite in etwa doppelt so groß wie die Spaltweite für den Betrieb in einem gasförmigen Medium.

Als flankierende Maßnahme ist gemäß Anspruch 2 eine Feinbearbeitung durch Drehen vorgesehen, um die Haftung des Hydrauliköls und damit die Reibungsverluste so gering wie möglich zu halten.

Eine konkrete Ausführungsform geht aus Anspruch 3 hervor. Mit einer derartig vergrößerten Spaltweite ergibt sich eine wünschenswerte Unempfindlichkeit des Elektromotors gegen Versetzungen des Läufers bzw. Abweichungen in der Lagerungsgeometrie der Welle des Läufers.

Das hydraulische Motorpumpenaggregat gemäß Anspruch 4 zeichnet sich durch eine verringerte Leistungsaufnahme des Unteröl-Elektromotors praktisch über dessen gesamten Arbeitsbereich aus, sowie durch eine verringerte thermische Belastung des Hydrauliköls (die Betriebstemperatur bei Dauerbetrieb mit abwechselnden Leerlauf- und Lastphasen sinkt um mehrere °C, wenn die Spaltweite entsprechend vergrößert wird). Die Standzeit des Hydrauliköls wird verlängert. Andererseits läßt sich die verringerte thermische Belastung des Hydrauliköls durch den Elektromotor dazu nutzen, das Hydrauliköl beim Arbeiten in den versorgten Verbrauchern höher zu belasten. Der Wirkungsgrad des Unteröl-Elektromotors ist gesteigert, was sich durch einen verringerten Stromverbrauch, insbesondere im Leerlaufbetrieb bemerkbar macht.

Anhand der Zeichnung wird eine Ausführungsform des Erfindungsgegenstandes erläutert. Es zeigen:
- Fig. 1: einen Längsteilschnitt eines elektrohydraulischen Motorpumpenaggregats, und
- Fig. 2: ein Diagramm zur Leistungsaufnahme (Watt) in Relation zur Spaltweite (mm).

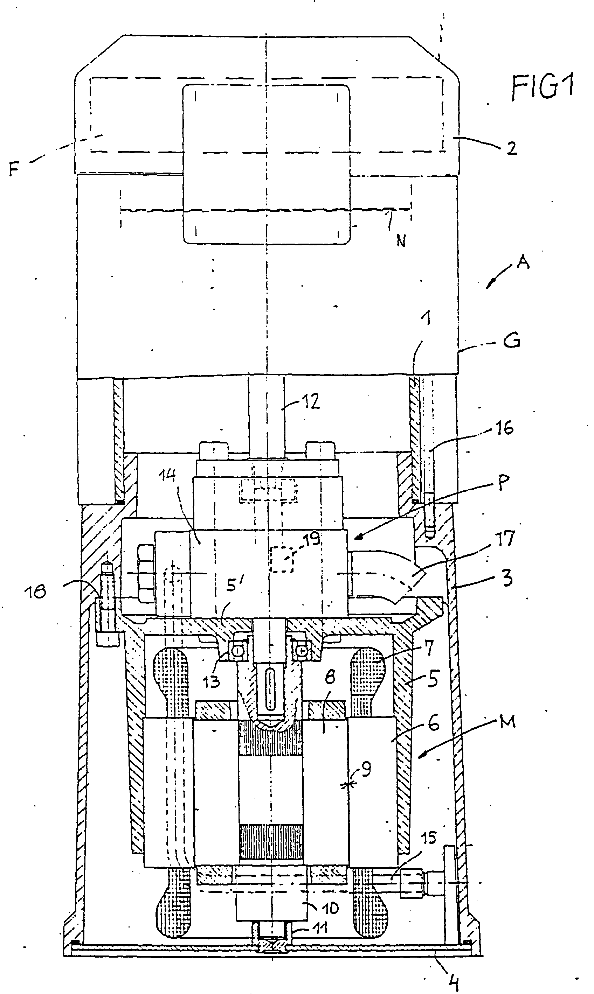

Das elektrohydraulische Motorpumpenaggregat A gemäß Fig. 1 weist in einem stehenden Gehäuse G einen Unteröl-Elektromotor M als Antriebsquelle für eine Ölpumpe P auf. Für Dauerbetrieb des Aggregats A kann außen auf dem Gehäuse G ein Kühlgebläse F, z.B ein Lüfterrad, vorgesehen sein, das entweder einen eigenen Antrieb besitzt oder direkt von dem Unteröl-Elektromotor M angetrieben wird. Ein für intermittierenden Betrieb ausgelegtes Aggregat A könnte auch ohne Kühlgebläse F ausgebildet sein.

Das Gehäuse G weist einen Gehäuseoberteil 1 mit einer Abdeckkappe 2 für das Kühlgebläse F auf. Der Gehäuseoberteil 1 ist auf einenGehäuseunterteil 3 aufgepreßt und durch Spannschrauben 16 gesichert. Der Gehäuseunterteil 3 wird durch einen Boden 4 nach unten verschlossen, z.B. durch eine eingesetzte Blechplatte.

Der Unteröl-Elektromotor M, zweckmäßigerweise ein Asynchronmotor, ist nahe des Bodens 4 in den Gehäuseunterteil 3 eingebaut. Er besteht aus einem Stator 6 mit oberen und unteren Statorwickelköpfen 7 und einem Läufer 8. Zwischen dem Außenumfang des Läufers 8 und dem Innenumfang des Stators 6 ist ein Spalt 9 vorgesehen. Der Stator 6 ist in eine Wärmeübertragungshülse 5 eingepreßt, während der Läufer 8 auf die Welle 10 aufgepreßt ist. Der Spalt 9 ist mit einer Spaltweite (einseitige Spaltweite) ausgebildet, die gegenüber der herstellerseits vorgeschriebenen Spaltweite für den Betrieb desselben Elektromtors in einem gasförmigen Medium gewollt vergrößert ist, um die thermische Belastung des Hydrauliköls durch den Elektromotor M und den Leistungsbedarf des Elektromotors zu verringern. Die einseitige Spaltweite für den Unteröl-Betrieb kann durchaus der doppelten oder mehrfachen einseitigen Spaltweite des Elektromotors M für den Betrieb in einem gasförmigen Medium betragen. Zweckmäßigerweise ist der Außenumfang des Läufers 8 und/oder der Innenumfang des Stators 6 durch Überdrehen feinbearbeitet, und zwar um die vergrößerte Spaltweite zu erreichen und möglichst glatte Oberflächen für das Hydrauliköl zu gewährleisten.

Der Unteröl-Elektromotor M wird mit stehender Welle 10 eingebaut. Das Aggregat A wird in der in Fig. 1 gezeigten stehenden Lage verwendet. Die Welle 10 ist im Boden 4 in einem Lager 11, z.B. einem Gleitlager, drehgelagert. An ihrem oberen Ende ist die Welle 10 hingegen in einem weiteren Lager 13, z.B. einem Wälzlager, in einer Endplatte 5' der Wärmeübertragungshülse 5 gelagert.

Die Ölpumpe P ist bei der gezeigten Ausführungsform eine Zahnradpumpe, die mit ihrem Gehäuse 14 auf der Oberseite der Endplatte 5' befestigt ist und mittels einer Hilfswelle 12 angetrieben wird, die mit der Welle 10 gekuppelt ist. Die Hilfswelle 12 könnte Teil der Welle 10 sein. Die Hilfswelle 12 setzt sich nach oben bis zum Kühlgebläse F fort. Vom Gehäuse 14 der Ölpumpe P führt eine Druckleitung 15 unten aus dem Gehäuse G heraus. Die Ölrückführung ist in dieser Darstellung nicht erkennbar. Die Ölpumpe P saugt durch einen Stutzen 17 an.

Zwischen der Wärmeübertragungshülse 5 und dem unteren Gehäuseteil 3 ist eine Trennfuge vorgesehen (Wärmeübertragungsbrücke 18). Ein Schwimmerschalter 19 kann vorgesehen sein, um bei Absinken des Ölspiegels N auf eine bestimmte Tiefe die Stromversorgung für den Unteröl-Elektromotor M abzuschalten oder ein Warnsignal zu initiieren.

Zum Versorgen von an die Druckleitung 15 angeschlossenen Verbrauchern steht ein Nutzvolumen an Hydrauliköl zur Verfügung, das durch die Differenz zwischen der höchsten Lage des Ölspiegels N und einer tiefsten Lage bestimmt wird, die entweder eingestellt ist durch die Position des Schwimmerschalters 19 oder gerade so tief liegt, daß die oberen Statorwickelköpfe 7 nicht freiliegen.

Anstelle einer als Zahnradpumpe ausgebildeten Ölpumpe P könnte auch eine Flügelpumpe, eine Axialkolbenpumpe oder eine Radialkolbenpumpe mit wenigstens einem Pumpenelement eingebaut sein. Die den Stator 6 aufnehmende Wärmeübertragungshülse 5 könnte ferner einstückig mit dem Gehäuseunterteil 3 vereinigt sein. Die Positionen des Unteröl-Elektromotors M und der Ölpumpe P könnten auch vertauscht sein.

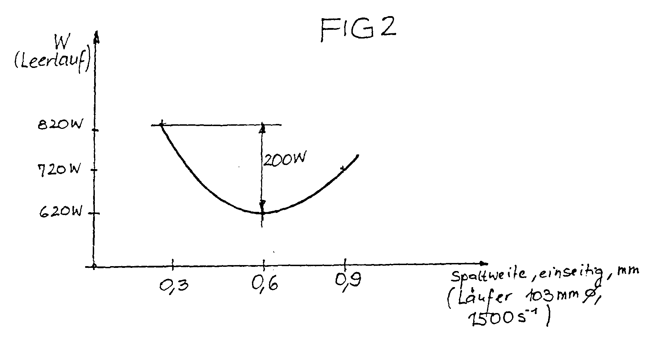

Fig. 2 ist ein Diagramm der Leistungsaufname des Unteröl-Elektromotors M (eines Asynchronmotors) über der einseitigen Spaltweite und verdeutlicht, daß bei einem Läuferaußendurchmesser von z.B. 103mm und einer Nenndrehzahl von 1500 s⁻¹ bei Leerlaufbetrieb bei einer Spaltweite von etwa 0,3mm (wie vom Hersteller vorgeschrieben) die Leistungsaufnahme 820 Watt beträgt. Die Leistungsaufnahme sinkt bei einer Vergrößerung der Spaltweite auf ca. 0,6mm auf ca. 620 Watt und beträgt bei einer Spaltweite von 0,9mm immer noch nur 720 Watt, verglichen mit der Leistungsaufnahme von 820 Watt bei der Spaltweite von 0,3mm. Diese Werte wurden ermittelt unter der Voraussetzung jeweils gleicher Öl-Fördermenge bzw. gleichen Förderdrucks. Die Vergrößerung der Spaltweite bedingt eine geringere thermische Belastung des Hydrauliköls, was sich durch eine Reduzierung der Betriebstemperatur des Hydrauliköls um mehrere °C bemerkbar macht.

## Patentansprüche

1. Elektromotor mit einem auf einer Antriebswelle (10) angeordneten Läufer (8), der von einem Stator (6) umgegeben ist, wobei zwischen dem Außenumfang des Läufers (8) und dem Innenumfang des Stators (6) ein Spalt (9) vorgesehen ist, **dadurch gekennzeichnet, daß** zur Verwendung des Elektromotors als Unteröl-Motor (M) zum Betrieb in Hydrauliköl, insbesondere als Antrieb einer Hydraulikölpumpe (P) in einem Motorpumpenaggregat (A), der Spalt (9) mit gegenüber der hinsichtlich des Wirkungsgrades optimalen Spaltweite des Elektromotors für den Betrieb in einem gasförmigen Medium vergrößerter, hinsichtlich des Wirkungsgrades in Hydrauliköl optimierter Spaltweite ausgebildet ist, und daß die Spaltweite des Elektromotors (M) als Unteröl-Motor in einem hydraulischen Motorpumpenaggregat (A) in etwa der doppelten Spaltweite des Elektromotors (M) für den Betrieb in einem gasförmigen Medium entspricht.

2. Elektromotor nach Anspruch 1, **dadurch gekennzeichnet, daß** der Spalt (9) mit der vergrößerten Spaltweite durch eine Drehfeinbearbeitung des Innenumfangs des Stators (6) und/oder des Außenumfangs des Läufers (8) hergestellt ist.

3. Elektromotor nach wenigstens einem der Ansprüche 1 oder 2, **dadurch gekennzeichnet, daß** die für einen Läuferdurchmesser zwischen ca. 50mm und 150mm vergrößerte Spaltweite einseitig zwischen etwa 0,4 und 0,8mm oder mehr beträgt.

4. Hydraulisches Motorpumpenaggregat, mit einem Gehäuse (G), in dem im Hydrauliköl ein Unteröl-Elektromotor (M) und wenigstens eine Hydraulikpumpe (8) vorgesehen sind, wobei zwischen dem Läufer (8) und dem Stator (6) des Unteröl-Elektromotors (M) ein Spalt (9) ausgebildet ist, **dadurch gekennzeichnet, daß** der Spalt (9) mit gegenüber der hinsichtlich des Wirkungsgrades optimalen Spaltweite des Elektromotors für den Betrieb in einem gasförmigen Medium auf in etwa das Doppelte vergrößerter und hinsichtlich einer verringerten thermischen Belastung des Hydrauliköls optimierter Spaltweite ausgebildet ist.

## Claims

1. Electric motor with a rotor (8) which is arranged on a drive shaft (10) and is surrounded by a stator (6), a gap (9) being provided between the outer circumference of the rotor (8) and the inner circumference of the stator (6), **characterized in that**, to use the electric motor as an oil-immersed motor (M) for operation in hydraulic oil, in particular as the drive of a hydraulic-oil pump (P) in a motor/pump assembly (A), the gap (9) is designed with a gap width which is enlarged, as compared with the optimum-efficiency gap width of the electric motor for operation in a gaseous medium, and which has optimized efficiency in hydraulic oil, and **in that** a gap width for the electric motor (M) as an oil-immersed motor in a hydraulic motor/pump assembly (A) corresponds approximately to double the gap width of the electric motor (M) for operation in a gaseous medium.

2. Electric motor according to Claim 1, **characterized in that** the gap (9) having the enlarged gap width is produced by a lathe-turned precision machining of the inner circumference of the stator (6) and/or of the outer circumference of the rotor (8).

3. Electric motor according to at least one of Claims 1 or 2, **characterized in that** the gap width enlarged for a rotor diameter of between approximately 50 mm and 150 mm amounts on one side to between approximately 0.4 and 0.8 mm or more.

4. Hydraulic motor/pump assembly, with a casing (G), in which an oil-immersed electric motor (M) and at least one hydraulic pump (8) are provided in the hydraulic oil, a gap (9) being formed between the rotor (8) and the stator (6) of the oil-immersed electric motor (M), **characterized in that** the gap (9) is designed with a gap width which is enlarged to approximately double the optimum-efficiency gap width of the electric motor for operation in a gaseous medium and which is optimized in terms of a reduced thermal load on the hydraulic oil.

## Revendications

1. Moteur électrique avec un rotor (8) monté sur un arbre d'entraînement (10), lequel rotor est entouré d'un stator (6), un entrefer (9) étant prévu entre le pourtour extérieur du rotor (8) et le pourtour intérieur du stator (6), **caractérisé en ce que,** pour l'utilisation du moteur électrique en tant que moteur à immersion dans l'huile (M) pour le fonctionnement dans de l'huile hydraulique, en particulier comme entraînement d'une pompe à huile hydraulique (P) dans un groupe motopompe (A), l'entrefer (9) est réalisé avec une largeur d'entrefer optimisée quant au rendement dans l'huile hydraulique et agrandie par rapport à la largeur d'entrefer, optimale quant au rendement, du moteur électrique pour le fonctionnement dans un milieu gazeux, et **en ce que** la largeur d'entrefer du moteur électrique (M) en tant que moteur à immersion dans l'huile dans un groupe motopompe hydraulique (A) correspond à peu près au double de la largeur d'entrefer du moteur électrique (M) pour le fonctionnement dans un milieu gazeux.

2. Moteur électrique selon la revendication 1,
**caractérisé en ce que** l'entrefer (9) avec la largeur d'entrefer agrandie est réalisé par un usinage fin par tournage du pourtour intérieur du stator (6) et/ou du pourtour extérieur du rotor (8).

3. Moteur électrique selon au moins l'une des revendications 1 ou 2, **caractérisé en ce que** la largeur d'entrefer agrandie pour un diamètre de rotor compris entre environ 50 mm et 150 mm est comprise unilatéralement entre environ 0,4 et 0,8 mm ou plus.

4. Groupe motopompe hydraulique, avec une enveloppe (G), dans laquelle sont prévus dans l'huile hydraulique un moteur électrique à immersion dans l'huile (M) et au moins une pompe hydraulique (8), un entrefer (9) étant réalisé entre le rotor (8) et le stator (6) de la partie moteur électrique (M), **caractérisé en ce que** l'entrefer (9) est réalisé avec une largeur d'entrefer optimisée quant à une charge thermique réduite de l'huile hydraulique et à peu près doublée par rapport à la largeur d'entrefer, optimale quant au rendement, du moteur électrique pour le fonctionnement dans un milieu gazeux.
